# EUROPEAN PATENT APPLICATION

(11) **EP 4 830 882 A1**
(43) Date of publication of application: **28.10.2026**
(21) Application number: 24906294.4
(22) Date of filing: 16.12.2024
(51) Int. Cl.: B25J 11/00

(54) **CLEANING ROBOT**

(30) Priority: 22.12.2023 CN 202311784117
(71) Applicant: Luo, Jichuan, 421001 Hengyang, Hunan (CN)
(72) Inventor: JIANG, Bin, Hengyang, Hunan 421101 (CN); GAO, Xiongwei, Hengyang, Hunan 421101 (CN); LUO, Jichuan, Hengyang, Hunan 421001 (CN)
(74) Representative: Neves, Ana
(86) International application number: PCT/CN2024/139601
(87) International publication number: WO 2025/130813

(57) **Abstract**

The present invention relates to the technical field of intelligent cleaning equipment and discloses a cleaning robot. The cleaning robot has at least one chamber at its bottom side. A suction module generates negative pressure in the chamber to attach the robot to a target cleaning surface, while a cleaning disc contacting the surface performs cleaning functions. The robot further includes a traveling mechanism comprising at least one support connected to the body and at least one traveling wheel mounted on the support. After attaching to the target surface, the traveling wheel presses against it and rolls under drive from a driving module, moving the robot along the surface. The invention directly drives movement by driving the traveling wheel. Since it does not rely on alternating torsion of the cleaning disc to drive travel, faster traveling speeds are achieved. This design improves cleaning efficiency and reduces the attachment force required during movement, making the robot more energy-efficient while reducing friction between the cleaning disc towel and the surface, which helps decrease towel consumption during operation.

## Description

### TECHNICAL FIELD OF THE INVENTION

The present invention relates to the technical field of intelligent cleaning equipment, and more particularly to a cleaning robot.

### BACKGROUND OF THE INVENTION

Various cleaning robots for panel surfaces such as glass windows have been proposed. For example, Chinese Patent Publication No. CN102920393A describes a cleaning machine for cleaning a panel, which attaches the cleaning machine to the panel by forming a negative pressure between the cleaning machine and the panel. Specifically, the cleaning machine includes a connecting arm provided between two cleaning discs, and both cleaning discs are fixedly connected to the connecting arm.

A driving module is used to prevent one of the cleaning discs from rotating while driving the other cleaning disc to rotate in a first rotational direction, thereby generating a torsional force between the rotating cleaning disc and the connecting arm. The torsional force causes the connecting arm to swing in a second rotational direction (opposite to the first rotational direction). By alternately driving the two cleaning discs to rotate, the cleaning machine is caused to move on the panel in a twitching manner, resulting in a relatively low movement speed.

### SUMMARY OF THE INVENTION

According to a first aspect, there is provided a cleaning robot comprising a body, a suction module, at least one chamber, at least one cleaning disc, a traveling mechanism, and a driving module. The suction module is configured to generate a negative pressure in the at least one chamber so as to attach the cleaning robot to a target cleaning surface. The at least one cleaning disc is arranged at a bottom side of the body and is configured to contact the target cleaning surface and perform a cleaning function when the cleaning robot is attached to the target cleaning surface. The traveling mechanism comprises at least one support connected to the body and at least one traveling wheel mounted on the at least one support. The driving module is configured to drive the at least one traveling wheel so that, when the cleaning robot is attached to the target cleaning surface, the at least one traveling wheel is pressed against and rolls on the target cleaning surface to move the cleaning robot along the target cleaning surface.

In some embodiments, the at least one chamber and/or the at least one traveling wheel is configured to be capable of elastic deformation or displacement when the cleaning robot is attached to the target cleaning surface, so that the at least one traveling wheel is pressed more tightly against the target cleaning surface while the at least one cleaning disc remains in contact with the target cleaning surface.

In some embodiments, the at least one chamber is provided within the at least one cleaning disc. The at least one cleaning disc and/or the at least one traveling wheel may be configured to float relative to the body when the cleaning robot is attached to the target cleaning surface. In some embodiments, the at least one cleaning disc is configured to elastically deform under compression by the target cleaning surface or to pivot relative to the body when the cleaning robot is attached to the target cleaning surface.

In some embodiments, the at least one traveling wheel is located at a center of the at least one cleaning disc, the at least one cleaning disc is provided with a mounting hole extending through the center thereof, and a top end of the at least one support passes through the mounting hole and is connected to the body. In some embodiments, the driving module comprises a motor connected to the body, the at least one cleaning disc is provided with a gear ring, a power output end of the motor is connected to a gear meshing with the gear ring, a peripheral edge of the mounting hole is provided with a first conical gear, and one end of a shaft of the at least one traveling wheel is provided with a second conical gear meshing with the first conical gear.

In some embodiments, at least one support is configured to pivot relative to the body so that the at least one traveling wheel mounted on the at least one support is arranged at an angle relative to a traveling direction of the cleaning robot during travel, thereby compensating for downward drift when the cleaning robot travels on a substantially vertical target cleaning surface.

In some embodiments, the at least one cleaning disc and the target cleaning surface establish an asymmetric contact pressure distribution.

In some embodiments, the cleaning robot further comprises a boundary detection device provided on the body. The boundary detection device may comprise a detection member, a trigger member, and a sensor. The detection member may be configured such that, when the cleaning robot is attached to the target cleaning surface, one end of the detection member is located outside the body and abuts against the target cleaning surface. The detection member may be movable in a first direction when subjected to external impact and movable in a second direction when moved outside the target cleaning surface, so as to move the trigger member to a sensing position and trigger the sensor to generate a sensing signal.

In some embodiments, the boundary detection device further comprises a fixed base and/or a U-shaped base. The detection member may be slidably mounted on the fixed base and connected thereto via a slider and a guide slot. The trigger member may move between sidewalls of the U-shaped base to change or block a signal transmission path of the sensor when the detection member is displaced by a frame or moved beyond an edge of an unframed surface.

### BRIEF DESCRIPTION OF THE DRAWINGS

FIG. 1 is a front view of the cleaning robot;
FIG. 2 is a first perspective view of the cleaning robot;
FIG. 3 is a second perspective view of the cleaning robot;
FIG. 4 is a cross-sectional view of the cleaning robot;
FIG. 5 is a first exploded view of the driving module and the cleaning disc;
FIG. 6 is a second exploded view of the driving module and the cleaning disc;
FIG. 7 is a perspective view of the driving module and the cleaning disc;
FIG. 8 is a cross-sectional view of the driving module and the cleaning disc;
FIG. 9 is a schematic structural view of the boundary detection device;
FIG. 10 is a cross-sectional view of the boundary detection device.

In the drawings :1-suction module;1a-negative pressure fan;2-cleaning disc;2a-chamber;3-body;4-support;5-traveling wheel;5a-shaft;6-driving module;6a-motor;6b-gear ring;6c-gear;6d-first conical gear;6e-second conical gear;7-tilting housing;8-elastic ring;9-boundary detection device;9a-fixed base;9a1-sliding groove;9a2-guide slot;9b-detection member;9b1-slider;9b2-accommodating hole;9c-trigger member;9c1-first trigger portion;9c2-second trigger portion;9d-elastic member;9e-sensor;9h-U-shaped base;10-controller;11-rotating shaft;12-elastic cotton;13-helical spring.

### DETAILED DESCRIPTION OF THE INVENTION

To facilitate those skilled in the art to more clearly understand the concept of the present invention, the present invention will be further described below in conjunction with embodiments and the accompanying drawings.

### Embodiment 1

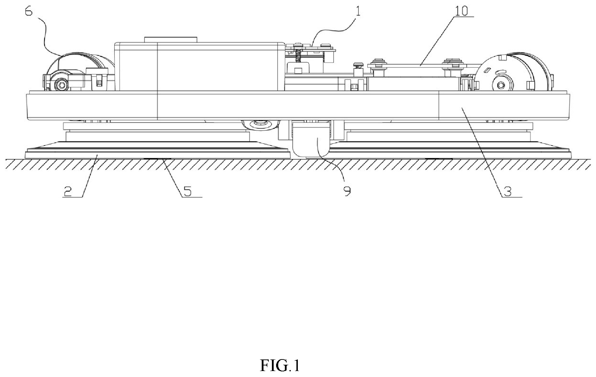

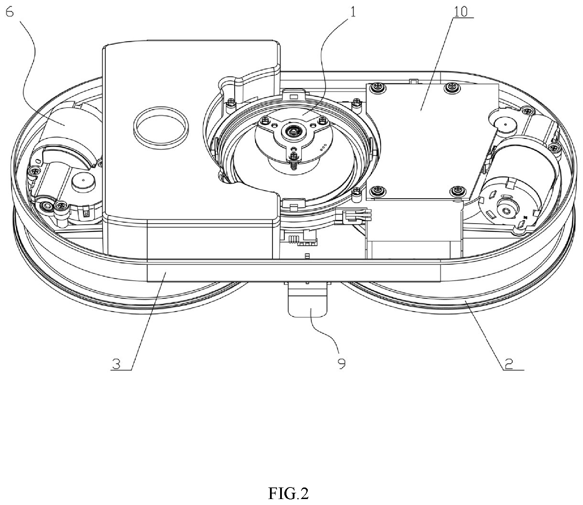

As shown in FIGS. 1-3, the cleaning robot of this embodiment mainly includes a cleaning disc 2, a suction module 1, a driving module 6, a controller 10, and a body 3. The number of the cleaning disc 2 may be multiple, and this embodiment is specifically described based on the number of the cleaning disc 2 being two. The suction module 1 includes, but is not limited to, a negative pressure fan 1a or a vacuum pump. In addition, since the air duct and the control circuit of the cleaning robot in this embodiment are similar to those of existing cleaning robots, for the purpose of simplifying the description, the above content will not be further described.

In this embodiment, at least one chamber 2a is provided at a bottom side of the cleaning robot, and a suction module 1 is used to generate a negative pressure in the chamber 2a so as to attach the cleaning robot to a target cleaning surface, and a cleaning disc 2 contacting the target cleaning surface is used to perform a cleaning function. Different from existing cleaning robots, the cleaning robot of this embodiment mainly relies on a traveling mechanism to achieve traveling on the target cleaning surface. The aforementioned target cleaning surface includes, but is not limited to, a surface of a flat panel (for example, a vertical glass window, a glass curtain wall, or the like). The traveling mechanism mainly includes at least one support 4 connected to the body 3 and at least one traveling wheel 5 mounted on the at least one support 4. After the cleaning robot is attached to the target cleaning surface, the traveling wheel 5 is pressed against the target cleaning surface and rolls on the target cleaning surface under a drive of a driving module 6 so as to move the cleaning robot along the target cleaning surface. The number of the support 4 and the traveling wheel 5 correspond to each other and may both be multiple, and this embodiment is only exemplified based on the number of the support 4 and the traveling wheel 5 both being two. When the cleaning robot is operating, the driving module 6 simultaneously drives two traveling wheels 5 (with the same rotational speed) to roll in the same direction on the target cleaning surface, so that the cleaning robot can achieve straight-line traveling; when encountering a situation requiring turning (for example, reaching a boundary of the target cleaning surface), the rotational speed of one of the traveling wheels 5 may be reduced, so that the other traveling wheel 5 with a faster speed can swing about the traveling wheel 5 with the faster speed as a rotation axis, thereby achieving turning. Of course, the aforementioned reduced-speed traveling wheel 5 may also be directly stopped from rotating, and the referred speed fast/slow is a relative state. This embodiment directly drives the cleaning robot to move along the target cleaning surface by driving the traveling wheel 5. Since the present invention does not rely on alternating torsion of the cleaning disc 2 to drive the cleaning robot to travel, a faster traveling speed can be achieved.

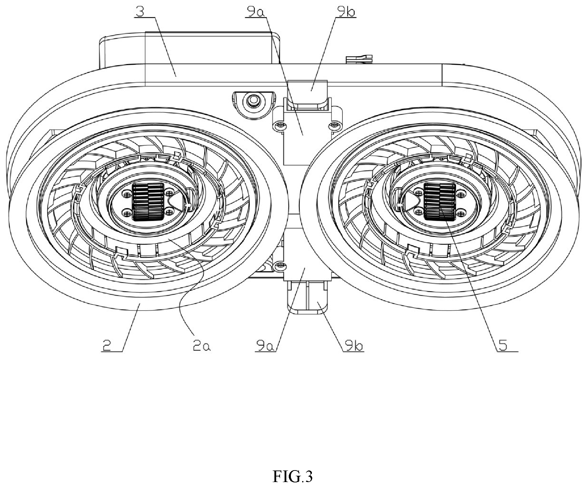

In the cleaning robot of this embodiment, the chamber 2a and/or the traveling wheel 5 is configured to be capable of elastic deformation or displacement when the cleaning robot is attached to the target cleaning surface, so that while the cleaning disc 2 contacts the target cleaning surface, the traveling wheel 5 is tightly pressed against the target cleaning surface. The chamber 2a may be provided on the body 3, may be provided on the cleaning disc 2 (see FIG. 3), or may be provided on other components connected to the body 3 (for example, an elastic deformable ring-shaped component is provided on the body 3, the chamber 2a is provided in the ring-shaped component, the bottom position of the ring-shaped component is lower than the bottom positions of the cleaning disc 2 and the traveling wheel 5, and when the cleaning robot is attached to the target cleaning surface, the ring-shaped component undergoes elastic deformation under compression by the target cleaning surface, so that the cleaning disc 2 contacts the target cleaning surface and the traveling wheel 5 is tightly pressed against the target cleaning surface).

The following description is specifically based on the chamber 2a being provided within the cleaning disc 2.

In this embodiment, the chamber 2a is provided within the cleaning disc 2, and the cleaning disc 2 is configured to be capable of floating relative to the body 3 when the cleaning robot is attached to the target cleaning surface, so that while the cleaning disc 2 contacts the target cleaning surface, the traveling wheel 5 is tightly pressed against the target cleaning surface. Specifically, floating of the cleaning disc 2 may be achieved by providing an elastic member between the cleaning disc 2 and the body 3. The elastic member may be elastic cotton 12, a helical spring 13, or other components capable of elastic deformation. The bottom end position of the cleaning disc 2 is lower than the bottom end position of the traveling wheel 5. When the cleaning robot is placed on the target cleaning surface, the cleaning disc 2 first contacts the target cleaning surface. When the cleaning robot is attached to the target cleaning surface, the elastic member is compressed and undergoes elastic deformation, and the cleaning disc 2 can move upward relative to the body 3 (similar to an "upward floating" effect) and contact the target cleaning surface, and the traveling wheel 5 is also tightly pressed against the target cleaning surface. This can increase the friction between the traveling wheel 5 and the target cleaning surface, so that the cleaning robot travels more stably and is less likely to slip.

In addition, when the cleaning robot travels on a vertical target cleaning surface (for example, vertical glass), due to the machine's own weight, the machine may slide downward when moving in the horizontal direction (hereinafter taking horizontal linear movement as an example), resulting in a downward offset of the travel path. To correct the machine sliding downward caused by the machine's gravity, the support 4 connected to the traveling wheel 5 located at the upper position during machine traveling may be configured to be capable of pivoting relative to the body 3, so that the traveling wheel 5 mounted on the support 4 can be arranged at an angle (the angle may be 0-30 degrees, preferably 0-10 degrees) relative to the traveling direction of the cleaning robot during traveling and form a component force applied to the cleaning robot that is opposite to the gravity direction of the cleaning robot. The component force can be used to eliminate the influence of the machine's own gravity on the travel path, so as to ensure that the machine travels linearly in the horizontal direction. Of course, the above setting may also be made for the support 4 connected to the traveling wheel 5 located at the lower position during machine traveling, or for the supports 4 connected to both traveling wheels 5 at the same time, and the principle is the same, so it will not be further described herein.

### Embodiment 2

The difference between this embodiment and Embodiment 1 lies in the traveling wheel 5. Specifically, in this embodiment, the traveling wheel 5 is configured to be capable of floating relative to the body 3 when the cleaning robot is attached to the target cleaning surface, so that while the cleaning disc 2 contacts the target cleaning surface, the traveling wheel 5 is tightly pressed against the target cleaning surface.

In this embodiment, floating of the traveling wheel 5 may be achieved by providing an elastic member between the support mounting the traveling wheel 5 and the body 3. The elastic member may be elastic cotton 12, a helical spring 13, or other components capable of elastic deformation. The bottom end position of the traveling wheel 5 is lower than the bottom end position of the cleaning disc 2. When the cleaning robot is placed on the target cleaning surface, the traveling wheel 5 first contacts the target cleaning surface. When the cleaning robot is attached to the target cleaning surface, the elastic member is compressed and undergoes elastic deformation, and the traveling wheel 5 can move upward relative to the body 3 (similar to an "upward floating" effect) and is tightly pressed against the target cleaning surface, and the cleaning disc 2 also contacts the target cleaning surface.

Those skilled in the art should understand that the floating cleaning disc structure in Embodiment 1 and the floating traveling wheel structure in Embodiment 2 may be combined. For example, both the cleaning disc 2 and the traveling wheel 5 may be configured as floating structures, and the principle is the same as described above, so it will not be further described herein.

### Embodiment 3

The difference between this embodiment and Embodiment 1 lies in the traveling wheel 5. Specifically, in this embodiment, the traveling wheel 5 is configured to be capable of elastic deformation when the cleaning robot is attached to the target cleaning surface, so that while the cleaning disc 2 contacts the target cleaning surface, the traveling wheel 5 is tightly pressed against the target cleaning surface.

In this embodiment, the traveling wheel 5 is made of rubber or plastic material capable of elastic deformation. The bottom end position of the traveling wheel 5 is lower than the bottom end position of the cleaning disc 2. When the cleaning robot is placed on the target cleaning surface, the traveling wheel 5 first contacts the target cleaning surface. When the cleaning robot is attached to the target cleaning surface, the traveling wheel 5 undergoes elastic deformation under compression by the target cleaning surface, and is thereby tightly pressed against the target cleaning surface, and at the same time, the cleaning disc 2 also contacts the target cleaning surface. The traveling wheel 5 may be made entirely of rubber or plastic material capable of elastic deformation, or only its peripheral portion contacting the target cleaning surface may be made of rubber or plastic material capable of elastic deformation.

### Embodiment 4

The difference between this embodiment and Embodiment 3 lies in the cleaning disc 2. Specifically, the chamber 2a is provided within the cleaning disc 2, and the cleaning disc 2 is configured to be capable of elastic deformation under compression by the target cleaning surface when the cleaning robot is attached to the target cleaning surface, so that while the cleaning disc 2 contacts the target cleaning surface, the traveling wheel 5 is tightly pressed against the target cleaning surface.

As a first implementation, the cleaning disc 2 is made of rubber or plastic material capable of elastic deformation. Before and after the cleaning disc 2 is attached to the target cleaning surface, the rotational axes of the two cleaning discs 2 are parallel, and the bottom position of the cleaning disc 2 is lower than the bottom position of the traveling wheel 5. The following description is exemplified based on the bottom of the cleaning disc 2 being a flat surface. When the cleaning robot is placed on the target cleaning surface, both sides of the bottom of the cleaning disc 2 simultaneously contact the target cleaning surface. When the cleaning disc 2 is attached to the target cleaning surface, the bottom of the cleaning disc 2 undergoes elastic deformation under compression by the target cleaning surface and contacts the target cleaning surface, wherein the deformation amounts of both sides of the bottom of the cleaning disc 2 are the same. At the same time, the traveling wheel 5 is also tightly pressed against the target cleaning surface. The elastic deformability of the cleaning disc 2 not only enables the traveling wheel 5 to closely contact the target cleaning surface, but also, after the cleaning disc 2 undergoes elastic deformation, the cleaning disc 2 contacts the target cleaning surface more tightly, the sealing performance of the chamber 2a will be better, the pressure difference between the inside and outside of the chamber 2a will increase, and the negative pressure value in the chamber 2a will increase, thereby reducing the power required for the suction module 1 during machine traveling and achieving an energy-saving effect. Of course, the bottom of the cleaning disc 2 may also be an inclined surface. When the cleaning robot is placed on the target cleaning surface, one side of the bottom of the cleaning disc 2 first contacts the target cleaning surface. When the cleaning disc 2 is attached to the target cleaning surface, the deformation amount of that side is greater than the deformation amount of other portions thereof, so that the pressure of that side against the target cleaning surface is greater than the pressure of other portions against the target cleaning surface, and the traveling wheel 5 can also be tightly pressed against the target cleaning surface.

As a second implementation, the cleaning disc 2 is made of rubber or plastic material capable of elastic deformation. Before and after the cleaning disc 2 is attached to the target cleaning surface, the rotational axes of the two cleaning discs 2 intersect to form an angle, and the bottom position of the cleaning disc 2 is lower than the bottom position of the traveling wheel 5. When the cleaning robot is placed on the target cleaning surface, one side of the cleaning disc 2 first contacts the target cleaning surface. When the cleaning disc 2 is attached to the target cleaning surface, the deformation amount of that side is greater than the deformation amount of other portions thereof, so that the pressure of that side against the target cleaning surface is greater than the pressure of other portions against the target cleaning surface, and the traveling wheel 5 can also be tightly pressed against the target cleaning surface.

As a third implementation, both the cleaning disc 2 and the traveling wheel 5 are made of rubber or plastic material capable of elastic deformation. Before and after the cleaning disc 2 is attached to the target cleaning surface, the rotational axes of the two cleaning discs 2 are parallel or intersect, and the bottom position of the cleaning disc 2 is higher than the bottom position of the traveling wheel 5. When the cleaning disc 2 is attached to the target cleaning surface, both the cleaning disc 2 and the traveling wheel 5 undergo elastic deformation under compression by the target cleaning surface. However, since the deformation amount of the traveling wheel 5 is greater than the deformation amount of the cleaning disc 2, the pressure of the traveling wheel 5 against the target cleaning surface will be greater than the pressure of the cleaning disc 2 against the target cleaning surface, so that the traveling wheel 5 is tightly pressed against the target cleaning surface, and at the same time the cleaning disc 2 also contacts the target cleaning surface.

As a fourth implementation, both the cleaning disc 2 and the traveling wheel 5 are made of rubber or plastic material capable of elastic deformation, and the elastic coefficient of the traveling wheel 5 is greater than the elastic coefficient of the cleaning disc 2. Before and after the cleaning disc 2 is attached to the target cleaning surface, the rotational axes of the two cleaning discs 2 are parallel or intersect, and the bottom position of the cleaning disc 2 and the bottom position of the traveling wheel 5 are at the same height (flush). When the cleaning disc 2 is attached to the target cleaning surface, both the cleaning disc 2 and the traveling wheel 5 undergo elastic deformation under compression by the target cleaning surface and the deformation amounts thereof are the same. However, since the elastic coefficient of the traveling wheel 5 is greater than the elastic coefficient of the cleaning disc 2, the pressure of the traveling wheel 5 against the target cleaning surface will be greater than the pressure of the cleaning disc 2 against the target cleaning surface, so that the traveling wheel 5 is tightly pressed against the target cleaning surface, and at the same time the cleaning disc 2 also contacts the target cleaning surface.

The above-mentioned elastic deformable cleaning disc 2 may be made entirely of rubber or plastic material capable of elastic deformation, or only its bottom portion may be made of rubber or plastic material capable of elastic deformation. Of course, the cleaning disc 2 may also be wrapped with a ring of soft rubber around its bottom (the soft rubber is made of rubber or plastic material capable of elastic deformation). The soft rubber may also be made into an elastic ring 8 and tightly fitted on the cleaning disc 2, which can facilitate disassembly and assembly.

### Embodiment 5

The difference between this embodiment and Embodiment 1 lies in the cleaning disc 2. Specifically, in this embodiment, the chamber 2a is provided within the cleaning disc 2, and at least one cleaning disc 2 is configured to be capable of pivoting relative to the body 3 when the cleaning robot is attached to the target cleaning surface.

The number of the above-mentioned pivotable cleaning disc 2 may be one or two.

For the case where only one cleaning disc 2 is configured to pivot relative to the body 3, the cleaning disc 2 may be connected to the body 3 via a set of rotating shafts 11 on the body 3, and the rotation axis of the rotating shaft 11 is perpendicular to the rotation axis of the cleaning disc 2. Before the cleaning disc 2 is attached to the target cleaning surface, the two cleaning discs 2 intersect to form an angle. After the cleaning disc 2 is attached to the target cleaning surface, one cleaning disc 2 pivots, and the rotation axis corresponding to the one cleaning disc 2 becomes parallel to the rotation axis corresponding to the other cleaning disc 2.

For the case where both cleaning discs 2 are configured to pivot relative to the body 3, both cleaning discs 2 may be connected to the body 3 via two sets of rotating shafts 11 provided in parallel and spaced on the body 3, and the rotation axis of each rotating shaft 11 is perpendicular to the rotation axis of the cleaning disc 2. Before the cleaning disc 2 is attached to the target cleaning surface, the two cleaning discs 2 intersect to form an angle. After the cleaning disc 2 is attached to the target cleaning surface, both cleaning discs 2 pivot, and the rotation axes corresponding to the two cleaning discs 2 become parallel.

The traveling wheel 5 may be provided on the outside of the cleaning disc 2 or on the inside of the cleaning disc 2. This embodiment is only exemplified based on the traveling wheel 5 being located on the outside of the cleaning disc 2. Specifically, the traveling wheel 5 and the cleaning disc 2 are spaced and provided below the body 3. A towel is mounted on the cleaning disc 2. Both cleaning discs 2 are capable of pivoting relative to the body 3. When the cleaning robot is placed on the target cleaning surface, one side of the cleaning disc 2 first contacts the target cleaning surface and pivots relative to the body 3. When the cleaning disc 2 is attached to the target cleaning surface, the pressure of that side against the target cleaning surface is greater than the pressure of other portions against the target cleaning surface, the towel on the cleaning disc 2 can be pressed tightly, and the traveling wheel 5 is also tightly pressed against the target cleaning surface. The cleaning disc 2 and/or the traveling wheel 5 may also be configured to be capable of elastic deformation (for example, the elastic deformable structures described in Embodiments 3 and 4) or displacement (for example, the floating structures described in Embodiments 1 and 2) when the cleaning robot is attached to the target cleaning surface, and may be selected as needed in practical application.

Those skilled in the art should understand that the structures in Embodiments 1-5 are not limited to being used separately, and they may also be combined in different manners. For example: (a) combining the floating structures of the cleaning disc 2 and the traveling wheel 5 in Embodiments 1 and 2 with the elastic deformable structures of the cleaning disc 2 and the traveling wheel 5 in Embodiments 3 and 4; (b) combining the elastic deformable structures of the cleaning disc 2 and the traveling wheel 5 in Embodiments 3 and 4 with the pivotable structure of the cleaning disc 2 in Embodiment 5; (c) combining the floating structures of the cleaning disc 2 and the traveling wheel 5 in Embodiments 1 and 2 with the pivotable structure of the cleaning disc 2 in Embodiment 5; (d) combining the floating structures of the cleaning disc 2 and the traveling wheel 5 in Embodiments 1 and 2, the elastic deformable structures of the cleaning disc 2 and the traveling wheel 5 in Embodiments 3 and 4, and the pivotable structure of the cleaning disc 2 in Embodiment 5. In practical application, the combination is not limited to the above several combination manners.

### Embodiment 6

The difference between this embodiment and Embodiment 5 lies in that the traveling wheel 5 is provided on the inside of the cleaning disc 2. The cleaning disc 2 and the traveling wheel 5 are correspondingly grouped one-to-one. In each group, the traveling wheel 5 and the cleaning disc 2 are linked via a transmission mechanism (for example, a gear transmission mechanism), and the driving module 6 is configured to drive the cleaning disc 2 to rotate so as to drive the traveling wheel 5 to roll.

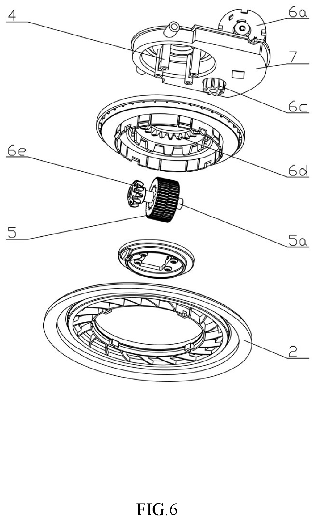

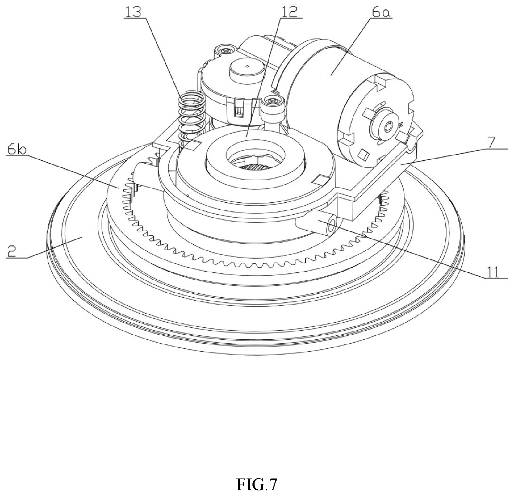

The following description is exemplified based on the case where both cleaning discs 2 are capable of pivoting relative to the body 3. Specifically, as shown in FIGS. 3-8, the body 3 is mounted with two tilting housings 7. The two tilting housings 7 are connected to the body 3 via two sets of rotating shafts 11 provided in parallel and spaced, and the rotation axis of the rotating shaft 11 is perpendicular to the rotation axis of the cleaning disc 2. The tilting housing 7 can pivot relative to the body 3 about the rotating shaft 11 as a rotation axis when the cleaning robot is attached to the target cleaning surface. The cleaning disc 2 is connected to the tilting housing 7. The support 4 mounting the traveling wheel 5 is connected to the body 3 via the tilting housing 7. Specifically, the traveling wheel 5 is located at the center of the cleaning disc 2. The cleaning disc 2 is provided with a mounting hole extending through the center of the cleaning disc 2. The top end of the support 4 passes through the mounting hole and is connected to the tilting housing 7. Before the cleaning disc 2 is attached to the target cleaning surface, the rotation axes of the two cleaning discs 2 intersect to form an angle. After the cleaning disc 2 is attached to the target cleaning surface, the two tilting housings 7 can drive the cleaning disc 2 and the traveling wheel 5 mounted thereon to pivot relative to the body 3 together. The rotation axes corresponding to the two cleaning discs 2 become parallel, and the rotation axes of the two traveling wheels 5 align.

In the cleaning robot of this embodiment, the driving module 6 includes a motor 6a connected to the tilting housing 7. The cleaning disc 2 is provided with a gear ring 6b (the gear ring 6b may be an inner gear ring or an outer gear ring). The gear ring 6b may be provided on a side facing the body 3 or the tilting housing 7. The power output end of the motor 6a is connected to a gear 6c that meshes with the gear ring 6b. The peripheral edge of the mounting hole provided in the cleaning disc 2 is provided with a first conical gear 6d. One end of the shaft 5a of the traveling wheel 5 is mounted with a second conical gear 6e that meshes with the first conical gear 6d. The first conical gear 6d is coaxially arranged with the cleaning disc 2, and the second conical gear 6e is coaxially arranged with the traveling wheel 5. The working principle of the driving module 6 is as follows: the motor 6a drives the gear 6c to rotate, the gear 6c drives the gear ring 6b to rotate, the cleaning disc 2 rotates accordingly, the rotating cleaning disc 2 drives the second conical gear 6e to rotate via the first conical gear 6d, and then the second conical gear 6e drives the traveling wheel 5 to rotate coaxially. The linked cleaning disc 2 and traveling wheel 5 can achieve synchronous operation. When the traveling wheel 5 drives the cleaning robot to travel, the corresponding cleaning disc 2 can also rotate synchronously to perform a cleaning function. This not only achieves higher cleaning efficiency, but also ensures cleaning performance.

Those skilled in the art should understand that the same transmission structure as in Embodiment 6 may also be used between the traveling wheel 5 and the cleaning disc 2 in Embodiments 3 and 4 to achieve linkage. The setting manner and working principle are similar to those in Embodiment 6. The difference lies only in that the tilting housing 7 is omitted, the motor 6a is directly connected to the body 3, and the top end of the support 4 passes through the mounting hole and is directly connected to the body 3. For the purpose of simplifying the description, the above content will not be further described herein. Of course, the transmission structure between the traveling wheel 5 and the cleaning disc 2 in Embodiment 6 may also be used in other embodiments. For the purpose of simplifying the description, specific examples will not be given one by one herein.

### Embodiment 7

The difference between this embodiment and Embodiment 6 lies in that the cleaning robot further includes a pivot drive mechanism configured to apply a pivot force to the two cleaning discs 2 configured to be capable of pivoting relative to the body 3, so as to cause the two cleaning discs 2 to pivot. By means of the pivot force applied by the pivot drive mechanism, when the two cleaning discs 2 are placed on the target cleaning surface, one side thereof first contacts the target cleaning surface, and after the two cleaning discs 2 are attached to the target cleaning surface, the pressure of the aforementioned side (that is, the side that first contacts the target cleaning surface) against the target cleaning surface is greater than the pressure of other portions thereof against the target cleaning surface.

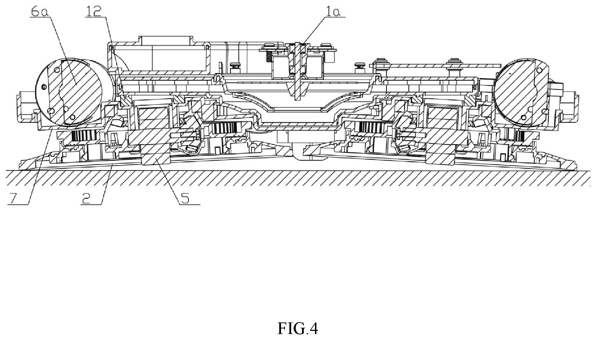

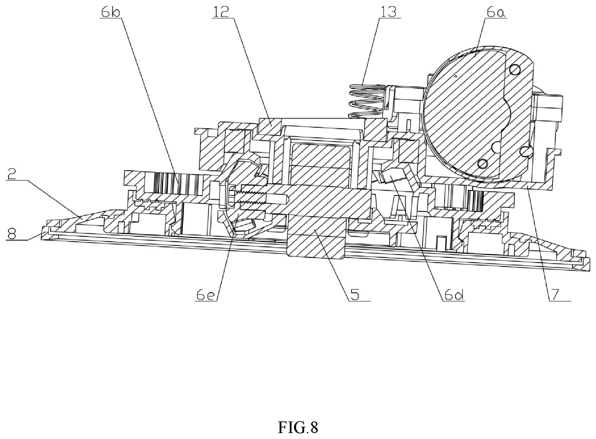

Specifically, pivot drive mechanisms are respectively provided between the body 3 and the two tilting housings 7. Referring to FIGS. 4, 5, 7, and 8, the pivot drive structure includes elastic cotton 12 provided between the body 3 and the tilting housing 7 (which may also be an elastic member of other material). The elastic cotton 12 may be square, circular, annular, or other shapes, and this embodiment is exemplified based on the elastic cotton 12 being annular. Further, the elastic cotton 12 is annular, and its lower end is mounted in an annular groove of the tilting housing 7, and its upper end is mounted on an annular protrusion provided at the end of the body 3. As shown in FIGS. 4 and 8, the thickness on both sides of each elastic cotton 12 is different. Under the action of no other external force, one cleaning disc 2 of the cleaning robot pivots counterclockwise relative to the body 3 under the action of the corresponding elastic cotton 12, and the other cleaning disc 2 pivots clockwise relative to the body 3 under the action of the corresponding elastic cotton 12, so that the rotation axes corresponding to the cleaning discs 2 intersect to form an angle. When the cleaning disc 2 is placed on the target cleaning surface, the side of the cleaning disc 2 corresponding to the thicker side of the elastic cotton 12 first contacts the target cleaning surface (see FIG. 4). After the cleaning disc 2 is attached to the target cleaning surface, the cleaning disc 2 pivots relative to the body 3 following the tilting housing 7, so that the thicker side of the elastic cotton 12 is compressed and undergoes elastic deformation, and the thinner side is not compressed and does not undergo elastic deformation (of course, this side may also undergo elastic deformation, but its deformation amount will be smaller than the deformation amount of the thicker side, so that the elastic forces received on both sides of the cleaning disc 2 are different). In this case, the pressure applied by the side of the cleaning disc 2 corresponding to the thicker side of the elastic cotton 12 to the target cleaning surface will be greater than the pressure applied by the side of the cleaning disc 2 corresponding to the thinner side of the elastic cotton 12. The rotation axis of the rotating shaft 11 may not be in the same plane as the rotation axis of the cleaning disc 2, that is, the rotating shaft 11 is located on one side of the cleaning disc 2, and the rotating shaft 11 may be on different sides of the cleaning disc 2 from the thicker side of the elastic cotton 12. For example, in the above structure, the rotating shaft 11 may be on the same side of the cleaning disc 2 as the thinner side of the elastic cotton 12.

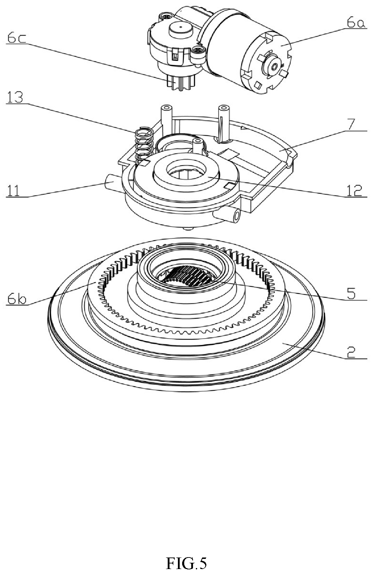

To further increase the pivot force of the pivot drive mechanism, a helical spring 13 may also be provided between the body 3 and the tilting housing 7. Specifically, referring to FIGS. 5, 7, and 8, the pivot drive mechanism further includes a helical spring 13 provided between the body 3 and the tilting housing 7. The lower end of the helical spring 13 is mounted on a columnar protrusion provided at the rear end of the tilting housing 7, and the upper end of the helical spring 13 is mounted on a columnar protrusion provided at the end of the body 3. The helical spring 13 and the thicker side of the elastic cotton 12 are on the same side of the tilting housing 7 (see FIG. 8). Under the action of no other external force, one cleaning disc 2 of the cleaning robot pivots counterclockwise relative to the body 3 under the action of the corresponding helical spring 13, and the other cleaning disc 2 pivots clockwise relative to the body 3 under the action of the corresponding helical spring 13, so that the rotation axes corresponding to the cleaning discs 2 intersect to form an angle. It should be noted that the helical spring 13 is not limited to the above setting manner. The helical spring 13 may also be set such that its upper end is fixedly connected to the end of the body 3 and its lower end is fixedly connected to a portion of the tilting housing 7 near the body 3, so that the helical spring 13 is in a stretched state (in this case, the helical spring 13 and the thinner side of the elastic cotton 12 are on the same side of the tilting housing 7). By means of the elastic force of the tension spring, one cleaning disc 2 can also pivot counterclockwise relative to the body 3, and the other cleaning disc 2 can pivot clockwise relative to the body 3.

It is necessary to emphasize that the aforementioned pivot drive mechanism is not limited to the structures of the elastic cotton 12 and the helical spring 13. The pivot drive mechanism may also be other elastic members, or may be other components that can be provided between the body 3 and the tilting housing 7 and apply a pivot force to the tilting housing 7, other than elastic members. For example, the pivot drive mechanism may be a magnetic assembly mutually attracting (relative to a tension spring) or repelling (equivalent to a compression spring) fixedly mounted on the body 3 and the corresponding tilting housing 7. By means of the attraction or repulsion between the magnetic assemblies, a pivot force can also be applied to the tilting housing 7. Preferably, the magnetic assembly includes an electromagnet. The control circuit of the electromagnet is coupled to the controller 10. The controller 10 can control the on/off of the current of the electromagnet to achieve control of the pivot drive mechanism.

### Embodiment 8

The difference between this embodiment and Embodiment 7 lies in that the traveling of the cleaning robot is no longer limited to being achieved solely by the rolling of the traveling wheel 5, but can also be assisted by the cleaning disc 2, so that the cleaning robot is driven to travel by the rotating cleaning disc 2 and the rolling traveling wheel 5 jointly.

Specifically, the two cleaning discs 2 are configured such that, when the two cleaning discs 2 are placed on the target cleaning surface, one side thereof first contacts the target cleaning surface, and after the two cleaning discs 2 are attached to the target cleaning surface, the pressure of that side against the target cleaning surface is greater than the pressure of other portions thereof against the target cleaning surface. Before the cleaning discs 2 are attached to the target cleaning surface, the two cleaning discs 2 intersect to form an angle. After the cleaning discs 2 are attached to the target cleaning surface, the two cleaning discs 2 pivot, and the rotation axes corresponding to the two cleaning discs 2 become parallel. Moreover, the two cleaning discs 2 are also configured to be capable of rotating relative to the target cleaning surface in a suitable direction, so that the resultant force of all static friction forces applied by the target cleaning surface to all the cleaning discs 2 is greater than zero and points to one side of the cleaning robot. In the above cleaning robot, the driving module 6 can simultaneously drive the two traveling wheels 5 to roll on the target cleaning surface, so as to achieve straight-line traveling of the cleaning robot with a faster traveling speed. At the same time, when the above two cleaning discs 2 perform a cleaning function, the resultant force of all static friction forces applied by the target cleaning surface to all the cleaning discs 2 also points in the traveling direction. The resultant force also serves as a driving force for straight-line traveling of the cleaning robot. In this case, the traveling speed of the cleaning robot will be further increased.

Of course, the pointing direction of the resultant force of all static friction forces applied by the target cleaning surface to all the cleaning discs 2 referred to in this embodiment is not limited to the above manner. The resultant force may also not point in the direction of straight-line traveling of the cleaning robot driven by the two traveling wheels 5. For example, the resultant force may point in a direction deviating from the direction of straight-line traveling of the cleaning robot driven by the two traveling wheels 5, thereby forming a component force in the same direction as the direction of straight-line traveling of the cleaning robot driven by the two traveling wheels 5, so as to serve as a driving force for driving the cleaning robot to travel straight. Alternatively, the resultant force may form a component force in the opposite direction to the direction of straight-line traveling of the cleaning robot driven by the two traveling wheels 5, so as to serve as a resistance for driving the cleaning robot to travel straight. In addition, the pointing direction of the resultant force may also be completely opposite to the direction of straight-line traveling of the cleaning robot driven by the two traveling wheels 5, and may be selected as needed in practical application.

When the cleaning robot is operating, the two cleaning discs 2 are simultaneously driven by the corresponding driving module 6 to rotate relative to the target cleaning surface in opposite directions (one counterclockwise and the other clockwise). Under the pivot forces simultaneously applied by the corresponding pivot drive mechanisms of the two cleaning discs 2, the resultant force of all static friction forces applied by the target cleaning surface to the two cleaning discs 2 is greater than zero and points to one side of the cleaning robot, so that the cleaning robot travels straight in the direction of the resultant force. At the same time, the two traveling wheels 5 also drive the cleaning robot to travel in the same direction. Under the joint drive of the traveling wheel 5 and the cleaning disc 2, the traveling speed of the cleaning robot is faster.

To ensure that, when the two cleaning discs 2 rotate in opposite directions, the corresponding traveling wheel 5 can roll in the same direction, the two second conical gears 6e may be respectively provided on different sides of the two cleaning discs 2 (mainly referring to the first conical gears 6d integrated therewith) (that is, one second conical gear 6e is provided on the left side of the corresponding cleaning disc 2, and the other second conical gear 6e is provided on the right side of the corresponding cleaning disc 2). See FIG. 4. In addition, to ensure that, when the two cleaning discs 2 rotate in opposite directions, the cleaning robot can be driven to travel straight, the pivot directions of the two cleaning discs 2 when attached to the target cleaning surface may be set to different directions (the left side of one cleaning disc 2 pivots upward and the right side pivots downward, that is, pivots clockwise, and the left side of the other cleaning disc 2 pivots downward and the right side pivots upward, that is, pivots counterclockwise). See FIG. 4 as well.

### Embodiment 9

The difference between this embodiment and Embodiment 8 lies in that the two cleaning discs 2 are configured such that, when the two cleaning discs 2 are placed on the target cleaning surface, one side thereof first contacts the target cleaning surface, and after the two cleaning discs 2 are attached to the target cleaning surface, the pressure of that side against the target cleaning surface is greater than the pressure of other portions thereof against the target cleaning surface. Before and after the cleaning discs 2 are attached to the target cleaning surface, the rotation axes of the two cleaning discs 2 always intersect to form an angle. The two cleaning discs 2 are also configured to be capable of rotating relative to the target cleaning surface in a suitable direction, so that the resultant force of all static friction forces applied by the target cleaning surface to all the cleaning discs 2 is greater than zero and points to one side of the cleaning robot.

Specifically, before and after the cleaning discs 2 are attached to the target cleaning surface, the rotation axes of the two cleaning discs 2 always intersect. The cleaning disc 2 and the traveling wheel 5 may adopt the elastic deformable structures in Embodiments 3 and 4. For example, only the cleaning disc 2 may be made of rubber or plastic material capable of elastic deformation, or both the cleaning disc 2 and the traveling wheel 5 may be made of rubber or plastic material capable of elastic deformation.

The working principle of this embodiment, in which the rotating cleaning disc 2 and the rolling traveling wheel 5 jointly drive the cleaning robot to travel straight, is similar to that in Embodiment 8. For the purpose of simplifying the description, the above content will not be further described herein.

### Embodiment 10

The difference between this embodiment and the above embodiments lies in that a boundary detection device 9 is further provided on the body 3. The boundary detection device 9 includes a detection member 9b, a trigger member 9c, and a sensor 9e. The detection member 9b is configured such that, at least when the cleaning robot is attached to the target cleaning surface, one end of the detection member 9b is located outside the body 3 and abuts against the target cleaning surface. The detection member 9b is capable of moving in a first direction (for example, moving in a horizontal direction) when subjected to external impact and capable of moving in a second direction (for example, moving in a vertical direction) when moved outside the target cleaning surface, so as to move the trigger member 9c to a preset sensing position and trigger the sensor 9e to generate a sensing signal. The aforementioned movement in the horizontal direction may include horizontal linear displacement, and the movement in the vertical direction may include upward and downward pivoting.

The manner in which the boundary detection device 9 in this embodiment performs boundary detection is as follows: during the process of cleaning a framed window glass by the cleaning robot, when the cleaning robot travels to the edge of the glass, the outer end of the detection member 9b is impacted by the frame and drives the trigger member 9c to move backward relative to the body 3, so that the trigger member 9c moves from the originally located non-trigger position to a first trigger position (preset sensing position), thereby triggering the sensor 9e to form a sensing signal. During the process of cleaning an unframed window glass by the cleaning robot, when the cleaning robot travels to the edge of the glass, since there is no frame blocking, the outer end of the detection member 9b is not impacted and does not move backward relative to the body 3. Instead, when the outer end of the detection member 9b moves outside the glass and becomes suspended (that is, the outer end of the detection member 9b detaches from the glass surface), due to the loss of support from the glass, the outer end of the detection member 9b pivots downward relative to the body 3, thereby causing the trigger member 9c to move from the originally located non-trigger position to a second trigger position (preset sensing position), and triggering the sensor 9e to form a sensing signal.

The boundary detection device 9 in this embodiment achieves boundary detection of framed window glass and unframed window glass by adopting one detection member 9b, one trigger member 9c, and one sensor 9e. The working mode and structure are relatively simple, which makes the stability and reliability of the detection device higher during long-term operation. At the same time, the production assembly efficiency of the factory can be improved to a certain extent, and the manufacturing cost of the detection device can be reduced.

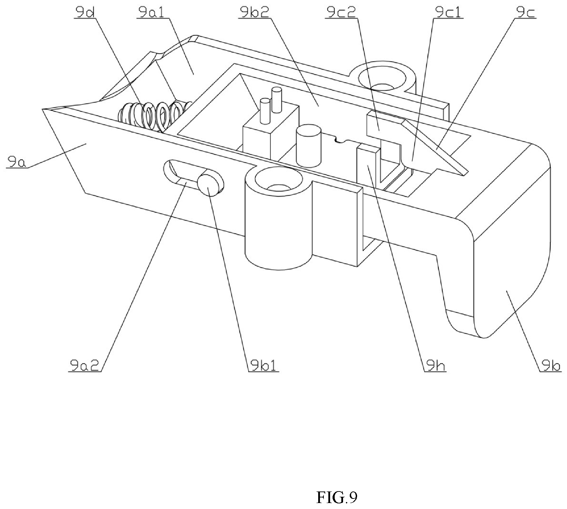

In this embodiment, the two cleaning discs 2 are located on the left and right sides of the body 3. A boundary detection device 9 is provided on each of the front and rear sides of the body 3, and each boundary detection device 9 is located between the two cleaning discs 2. Referring to FIGS. 9-10 for the specific structure of a single boundary detection device 9, it mainly includes a fixed base 9a fixedly mounted on the front and rear sides of the bottom of the body 3, and a detection member 9b, a trigger member 9c, and a sensor 9e mounted on the fixed base 9a. The sensor 9e may also be directly provided on the body 3 or other components. In this embodiment, the sensor 9e adopts a blocking sensor. Of course, other types of sensors may also be selected, for example, a reflective sensor, as long as the sensor can be triggered to generate a sensing signal by the positional movement of the trigger member 9c. In addition, the manner in which the trigger member 9c triggers the sensing signal may be contact triggering with the sensor 9e, or may be noncontact triggering, for example, by blocking or changing the original signal transmission path of the sensor 9e to trigger the sensing signal. Since the trigger member 9c needs to generate a sensing signal when moving from the non-trigger position to the first trigger position (corresponding to boundary detection of framed window glass) and when moving from the non-trigger position to the second trigger position (corresponding to boundary detection of unframed window glass), in this embodiment, an avoidance notch (in an L-shaped form) is provided at the lower end of the rear side of the trigger member 9c to avoid the sensor 9e when the trigger member 9c is in the non-trigger position. The lower end of the front side of the trigger member 9c (that is, the front side of the avoidance notch) is a first trigger portion 9c1, and the upper end of the rear side of the trigger member 9c (that is, the upper side of the avoidance notch) is a second trigger portion 9c2. When the trigger member 9c moves from the non-trigger position to the first trigger position, the first trigger portion 9c1 blocks the original signal transmission path of the sensor 9e to trigger the sensor 9e to generate a sensing signal. When the trigger member 9c moves from the non-trigger position to the second trigger position, the second trigger portion 9c2 blocks the original signal transmission path of the sensor 9e to trigger the sensing signal.

As shown in FIGS. 9-10, a sliding groove 9a1 is provided on the fixed base 9a, and the detection member 9b is mounted in the sliding groove 9a1 and can move forward and backward along the sliding groove 9a1. Guide slots 9a2 are provided on both sides of the sliding groove 9a1. The guide slots 9a2 may be elongated through holes or blind holes. Sliders 9b1 matching the guide slots 9a2 are provided on both sides of the detection member 9b. The slider 9b1 is mounted in the guide slot 9a2 and can move along the guide slot 9a2 under the drive of the detection member 9b. The guide slot 9a2 can serve a guiding function. The detection member 9b may be designed as a movable base. The outer end of the detection member 9b is located outside the fixed base 9a and is in an L-shaped form. The inner end of the detection member 9b and the portion between the outer end and the inner end are located in the sliding groove 9a1. A gap is left between the portion of the detection member 9b located in the sliding groove 9a1 and the bottom wall of the sliding groove 9a1, so that the detection member 9b can pivot upward and downward relative to the fixed base 9a (body 3) about the axis of the slider 9b1 as a rotation axis. Typically, the detection member 9b pivots only when the slider 9b1 moves to the front end of the guide slot 9a2. In addition, the distance between the slider 9b1 and the inner end of the detection member 9b may be smaller than the distance between the slider 9b1 and the outer end of the detection member 9b, so that the slider 9b1 is located at a position closer to the rear of the center of the detection member 9b. Of course, the slider 9b1 may also be located at the center position of the detection member 9b or at a position closer to the front of the center, depending on actual needs.

To cause the outer end of the detection member 9b to be located outside the body 3 and abut against the target cleaning surface during operation of the cleaning robot, a driving mechanism may be provided on the body 3, the fixed base 9a, or other components. The driving mechanism can apply a force to the detection member 9b to cause the outer end of the detection member 9b to be located outside the body 3 and abut against the target cleaning surface. By means of the force, the detection member 9b can be caused to reset (move forward) after the external impact is released, and the detection member 9b can be caused to pivot downward when moved out of the target cleaning surface. The driving mechanism may be an elastic member 9d or may be other components other than the elastic member 9d that can cause the detection member 9b to perform the above movements.

The following description is exemplified based on the driving mechanism being an elastic member 9d. Specifically, the elastic member 9d is provided between the inner end of the detection member 9b and the rear wall of the fixed base 9a (that is, the rear wall of the sliding groove 9a1). The elastic member 9d may be a helical spring 13 or other elastic components. The two ends of the elastic member 9d may be fixed on protruding columns of the detection member 9b and the fixed base 9a. The elastic deformation direction of the elastic member 9d and the direction in which the slider 9b1 moves along the guide slot 9a2 intersect to form an angle. For example, the guide slot 9a2 extends horizontally from front to back, and the extension and retraction direction of the elastic member 9d is inclined relative to the extension direction of the guide slot 9a1. This enables the detection member 9b, which was originally impacted by the frame, to move forward by the elastic force of the elastic member 9d after leaving the frame, and enables the detection member 9b, which was originally abutting against the target cleaning surface, to pivot downward relative to the body 3 about the axis of the slider 9b1 as a rotation axis by the elastic force of the elastic member 9d after moving outside the boundary. Specifically, the inner end surface of the detection member 9b and the rear wall of the fixed base 9a are parallel to each other and tilted backward relative to a vertical plane, and the elastic member 9d is perpendicular to the inner end surface of the detection member 9b and the rear wall surface of the fixed base 9a. In addition, when the side portion of the outer end of the detection member 9b is impacted by the frame and moves backward and when the bottom of the outer end of the detection member 9b abuts against the window glass, the elastic member 9d is in a compressed state. Then, when the detection member 9b moves away from the frame of the framed window glass and moves outside the boundary of the unframed window glass, the elastic member 9d can apply an elastic force to the detection member 9b to drive the detection member 9b to move forward along the guide slot 9a2 and pivot downward about the axis of the slider 9b1 as a rotation axis.

A U-shaped base 9h may also be provided on the fixed base 9a. The sensor 9e is mounted on the inner sidewall of the U-shaped base 9h. An accommodating hole 9b2 is provided on the detection member 9b. The U-shaped base 9h is located in the accommodating hole 9b2. The lower end of the rear side of the trigger member 9c is an avoidance notch and is located on the front side of the accommodating hole 9b2. During boundary detection of framed window glass by the cleaning robot, when the side portion of the outer end of the detection member 9b is impacted by the frame, the trigger member 9c moves backward with the detection member 9b, so that the lower end of the front side of the trigger member 9c (the first trigger portion 9c1) moves between the two sidewalls of the U-shaped base 9h, thereby triggering the sensor 9e to generate a sensing signal. During boundary detection of unframed window glass by the cleaning robot, when the bottom of the outer end of the detection member 9b moves out of the glass boundary, the trigger member 9c pivots downward with the detection member 9b, so that the upper end of the rear side of the trigger member 9c (the second trigger portion 9c2) moves between the two sidewalls of the U-shaped base 9h, thereby triggering the sensor 9e to generate a sensing signal.

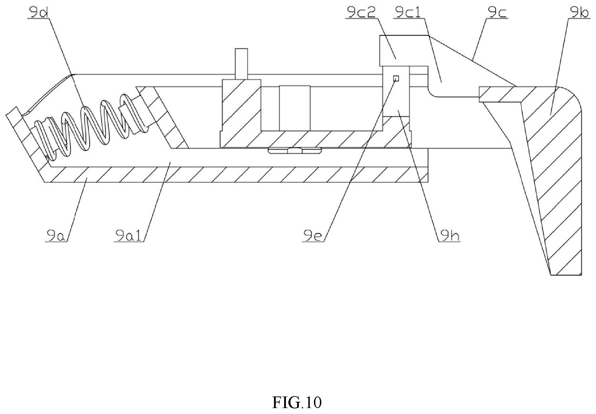

FIG. 10 shows the relative position relationship between the first trigger portion 9c1, the second trigger portion 9c2, and the sensor 9e when the trigger member 9c is in the non-trigger position. It can be seen from the figure that when the trigger member 9c is in the non-trigger position, the first trigger portion 9c1 is located on the front side of the signal transmission path of the sensor 9e, and the second trigger portion 9c2 is located above the signal transmission path of the sensor 9e. During the operation of the cleaning robot, when the cleaning robot moves to the edge of the framed window glass, the detection member 9b is impacted by the frame of the glass. Since the detection member 9b can move backward relative to the fixed base 9a (body 3) when impacted by the frame of the glass, under the pushing and extruding action of the frame, the detection member 9b drives the trigger member 9c to move in the backward direction. When the trigger member 9c moves backward to interfere with the original signal transmission path of the sensor 9e (at this time the trigger member 9c is in the first trigger position), the original signal transmission path is blocked, thereby triggering a sensing signal. When the cleaning robot travels to the edge of the unframed window glass, since the detection member 9b is not subjected to the pushing action of the frame, the detection member 9b does not undergo transverse displacement (forward and backward movement) relative to the fixed base 9a. However, the detection member 9b will move outside the glass and be in a suspended state. After losing the support of the glass, the detection member 9b drives the trigger member 9c to pivot downward relative to the fixed base 9a. When the second trigger portion 9c2 pivots downward to interfere with the original signal transmission path of the sensor 9e (at this time the trigger member 9c is located in the second trigger position), the original signal transmission path is blocked, thereby triggering a sensing signal.

The above embodiments are preferred implementation solutions of the present invention. Any obvious replacement within the premise of not departing from the concept of the present technical solution is within the scope of protection of the present invention.

In certain embodiments, contact between the at least one cleaning disc and the target cleaning surface establishes an asymmetric contact pressure distribution. The asymmetric contact pressure distribution causes friction generated during rotation of the at least one cleaning disc to have a non-zero resultant force, and the non-zero resultant force is configured to propel or assist in propelling the cleaning robot along the target cleaning surface.

## Claims

1. A cleaning robot, **characterized by** comprising at least one chamber (2a) at a bottom side thereof, a suction module (1) for generating a negative pressure in the at least one chamber (2a) to attach the cleaning robot to a target cleaning surface, and at least one cleaning disc (2) for contacting the target cleaning surface and performing a cleaning function when the cleaning robot is attached to the target cleaning surface, wherein the cleaning robot further comprises a traveling mechanism, the traveling mechanism comprising a support (4) connected to a body (3) and a traveling wheel (5) correspondingly mounted on the support (4); and
wherein, after the cleaning robot is attached to the target cleaning surface, the traveling wheel (5) is pressed against the target cleaning surface and rolls on the target cleaning surface under driving of a driving module (6) to move the cleaning robot along the target cleaning surface.

2. The cleaning robot according to claim 1, wherein the at least one chamber (2a) and/or the at least one traveling wheel (5) is configured to be capable of elastic deformation or displacement when the cleaning robot is attached to the target cleaning surface, so that the at least one cleaning disc (2) contacts the target cleaning surface while the at least one traveling wheel (5) is pressed tightly against the target cleaning surface.

3. The cleaning robot according to claim 1, wherein the at least one chamber (2a) is provided within the at least one cleaning disc (2), and the at least one cleaning disc (2) and/or the at least one traveling wheel (5) is configured to float relative to the body (3) when the cleaning robot is attached to the target cleaning surface, so that the at least one cleaning disc (2) contacts the target cleaning surface while the at least one traveling wheel (5) is pressed tightly against the target cleaning surface.

4. The cleaning robot according to claim 1, wherein the at least one chamber (2a) is provided within the at least one cleaning disc (2), and the at least one cleaning disc (2) is configured to be elastically deformed under compression by the target cleaning surface when the cleaning robot is attached to the target cleaning surface, so that the at least one cleaning disc (2) contacts the target cleaning surface while the at least one traveling wheel (5) is pressed tightly against the target cleaning surface.

5. The cleaning robot according to claim 1, wherein the at least one chamber (2a) is provided within the at least one cleaning disc (2), and at least one cleaning disc (2) is configured to pivot relative to the body (3) when the cleaning robot is attached to the target cleaning surface, so that the at least one cleaning disc (2) contacts the target cleaning surface while the at least one traveling wheel (5) is pressed tightly against the target cleaning surface.

6. The cleaning robot according to any one of claims 1 to 5, wherein the at least one traveling wheel (5) is located at a center of the at least one cleaning disc (2), the at least one cleaning disc (2) is provided with a mounting hole extending through a center thereof, and a top end of the at least one support (4) passes through the mounting hole and is connected to the body (3); and
preferably, the driving module (6) comprises a motor (6a) connected to the body (3), the at least one cleaning disc (2) is provided with a gear ring (6b), a power output end of the motor (6a) is connected to a gear (6c) meshing with the gear ring (6b), a peripheral edge of the mounting hole is provided with a first conical gear (6d), and one end of a shaft (5a) of the at least one traveling wheel (5) is provided with a second conical gear (6e) meshing with the first conical gear (6d), wherein the first conical gear (6d) is coaxially arranged with the at least one cleaning disc (2), and the second conical gear (6e) is coaxially arranged with the at least one traveling wheel (5).

7. The cleaning robot according to any one of claims 1 to 5, wherein at least one support (4) is configured to pivot relative to the body (3), so that the traveling wheel (5) mounted on the at least one support (4) is arranged at an angle with respect to a traveling direction of the cleaning robot during travel, thereby forming a component force applied to the cleaning robot opposite to a gravity direction of the cleaning robot.

8. The cleaning robot according to claim 4, wherein at least two cleaning discs (2) are configured such that, after the at least two cleaning discs (2) are attached to the target cleaning surface, a pressure exerted on the target cleaning surface by one side of each of the at least two cleaning discs (2) is greater than a pressure exerted by other portions thereof, and at least after the at least two cleaning discs (2) are attached to the target cleaning surface, rotational axes of the at least two cleaning discs (2) intersect to form an angle.

9. The cleaning robot according to claim 5, wherein at least two cleaning discs (2) are configured such that, before the at least two cleaning discs (2) are attached to the target cleaning surface, rotational axes of the at least two cleaning discs (2) intersect to form an angle, and after the at least two cleaning discs (2) are attached to the target cleaning surface, the rotational axes of the at least two cleaning discs (2) are parallel to each other, and a pressure exerted on the target cleaning surface by one side of each of the at least two cleaning discs (2) is greater than a pressure exerted by other portions thereof.

10. The cleaning robot according to claim 1, wherein a boundary detection device (9) is provided on the body (3), the boundary detection device (9) comprising a detection member (9b), a trigger member (9c), and a sensor (9e), wherein the detection member (9b) is configured such that, at least when the cleaning robot is attached to the target cleaning surface, one end of the detection member (9b) is located outside the body (3) and abuts against the target cleaning surface, and the detection member (9b) is movable in a first direction when subjected to external impact and movable in a second direction when moved outside the target cleaning surface, so as to move the trigger member (9c) to a preset sensing position and trigger the sensor (9e) to generate a sensing signal.
